# EUROPEAN PATENT APPLICATION

(11) **EP 4 819 500 A1**
(43) Date of publication of application: **07.10.2026**
(21) Application number: 24895297.0
(22) Date of filing: 22.01.2024
(51) Int. Cl.: H04B 3/54

(54) **COMMUNICATION CONTROL METHOD AND APPARATUS, HOST DEVICE, SLAVE DEVICE, AND PHOTOVOLTAIC SYSTEM**

(30) Priority: 29.11.2023 CN 202311648420
(71) Applicant: Sungrow Power Supply Co., Ltd., Hefei, Anhui 230088 (CN)
(72) Inventor: QIN, Kun, Hefei, Anhui 230088 (CN); WANG, Zhen, Hefei, Anhui 230088 (CN); LUO, Jing, Hefei, Anhui 230088 (CN)
(74) Representative: Epping - Hermann - Fischer
(86) International application number: PCT/CN2024/073411
(87) International publication number: WO 2025/112183

(57) **Abstract**

A communication control method and apparatus, a host device, a slave device, and a photovoltaic system. The communication control method is applied to the photovoltaic system, and the host device is connected to the slave device by means of a power cable. The communication control method comprises: the host device communicates with the slave device by using a first band, and collects statistics about the communication packet loss rate of the slave device within a specified historical time period; and if the communication packet loss rate of the slave device is greater than a preset packet loss rate threshold, the host device controls the communication band of the slave device to switch to a second band, wherein the band value of the second band is lower than that of the first band. The host device uses a low-frequency band to communicate with the slave device, reducing the packet loss rate of communication, improving the stability of communication quality.

## Description

This application claims the priority to Chinese Patent Application No. CN202311648420.6, titled "COMMUNICATION CONTROL METHOD AND APPARATUS, MASTER DEVICE, SLAVE DEVICE, AND PHOTOVOLTAIC SYSTEM", filed on November 29, 2023 with the China National Intellectual Property Administration, which is incorporated herein by reference in its entirety.

### FIELD

The present disclosure relates to the field of electric power technology, and in particular to a communication control method and apparatus, a master device, a slave device, and a photovoltaic system.

### BACKGROUND

Communication media for PLC (Power Line Communication) are power lines. Noise exists in the power lines and may cause loss of communication signals. The type and material of the power lines may also affect the communication signals. When devices at two ends of a communication link are far apart, and thus the power lines are long, PLC communication signals suffer significant attenuation, leading to an excessively high packet loss rate and unstable communication quality.

### SUMMARY

In view of this, an object of the present disclosure is to provide a communication control method and apparatus, a master device, a slave device, and a photovoltaic system, to reduce packet loss rates in communication and enhance the stability of communication quality.

In a first aspect, a communication control method is provided according to an embodiment of the present disclosure. The method is applied to a photovoltaic system. In the photovoltaic system, a master device and a slave device are connected to each other via a power line. The method includes: communicating, by the master device, with the slave device using a first frequency band; determining, by the master device, a communication packet loss rate of the slave device for a specified historical time period; and controlling, by the master device in response to the communication packet loss rate of the slave device being greater than a predetermined packet loss rate threshold, the slave device to switch a communication frequency band of the slave device to a second frequency band, where the second frequency band is lower than the first frequency band.

The number of the slave device is more than one, and the controlling, by the master device in response to the communication packet loss rate of the slave device being greater than a predetermined packet loss rate threshold, the slave device to switch a communication frequency band of the slave device to a second frequency band includes: controlling, by the master device in response to a communication packet loss rate of a first device among the slave devices being greater than the predetermined packet loss rate threshold, the first device to switch a communication frequency band of the first device to the second frequency band, while maintaining at least one other slave device on the first frequency band.

After the controlling, by the master device in response to a communication packet loss rate of a first device among the slave devices being greater than the predetermined packet loss rate threshold, the first device to switch a communication frequency band of the first device to the second frequency band, while maintaining at least one other slave device on the first frequency band, the method further includes: communicating, by the master device, with the first device using the second frequency band and with the at least one other slave device using the first frequency band.

The communicating, by the master device, with the slave device using a first frequency band includes: transmitting, by the master device, a communication message to the slave device using the first frequency band; initiating, by the master device, timing; and waiting, by the master device, to receive a response message from the slave device to the communication message within a predetermined timeout period.

The determining, by the master device, a communication packet loss rate of the slave device for a specified historical time period includes: obtaining, by the master device for the specified historical time period, a volume of communication messages transmitted to the slave device and a volume of received response messages to the communication messages; and determining, by the master device, the communication packet loss rate of the slave device based on a ratio of the volume of the received response messages to the volume of the communication messages.

The controlling, by the master device, the first device to switch a communication frequency band of the first device to the second frequency band includes: transmitting, by the master device, a frequency band configuration instruction to the first device, where in response to the frequency band configuration instruction, the communication frequency band of the first device is switched to the second frequency band by the first device; and storing, by the master device, a correspondence between a device address associated with the first device and the second frequency band.

Before the transmitting, by the master device, a frequency band configuration instruction to the first device, the method further includes: generating, by the master device, a correspondence between device addresses associated with the slave devices and respective communication frequency bands. In an initial state, each of the communication frequency bands in the correspondence is configured to the first frequency band. The storing, by the master device, a correspondence between a device address associated with the first device and the second frequency band includes: updating, by the master device for the correspondence, the communication frequency band corresponding to the device address associated with the first device to the second frequency band.

The communicating, by the master device, with the first device using the second frequency band and with the at least one other slave device using the first frequency band includes: obtaining, by the master device, a to-be-transmitted message and extracting, by the master device, a target device address from the to-be-transmitted message; determining, by the master device, a target communication frequency band corresponding to the target device address from a correspondence between device addresses associated with the slave devices and respective communication frequency bands, where in the correspondence, a device address associated with the first device is stored in association with the second frequency band, and a device address associated with the at least one other slave device is stored in association with the first frequency band; transmitting, by the master device, the to-be-transmitted message to the slave device associated with the target device address by using the first frequency band, in response to the target communication frequency band being the first frequency band; and transmitting, by the master device, the to-be-transmitted message to the first device associated with the target device address by using the second frequency band, in response to the target communication frequency band being the second frequency band.

The transmitting, by the master device, the to-be-transmitted message to the slave device associated with the target device address by using the first frequency band, in response to the target communication frequency band being the first frequency band includes: obtaining, by the master device, a current communication frequency band of the master device, in response to the target communication frequency band being the first frequency band; and switching, by the master device in response to the current communication frequency band being the second frequency band, the current communication frequency band from the second frequency band to the first frequency band, and transmitting, by the master device, the to-be-transmitted message to the slave device associated with the target device address by using the first frequency band.

The transmitting, by the master device, the to-be-transmitted message to the first device associated with the target device address by using the second frequency band, in response to the target communication frequency band being the second frequency band includes: obtaining, by the master device, a current communication frequency band of the master device, in response to the target communication frequency band being the second frequency band; and switching, by the master device in response to the current communication frequency band being the first frequency band, the current communication frequency band from the first frequency band to the second frequency band, and transmitting, by the master device, the to-be-transmitted message to the first device associated with the target device address by using the second frequency band.

The master device is further communicatively connected to a host computer, and the method further includes: receiving, by the master device, a relationship configuration instruction transmitted by the host computer, and obtaining, by the master device, a to-be-configured device and a to-be-configured frequency band from the relationship configuration instruction, and updating, by the master device for the correspondence, the communication frequency band corresponding to a device address associated with the to-be-configured device to the to-be-configured frequency band.

The master device is further communicatively connected to a data collector in a photovoltaic system, and the method further includes: obtaining, by the master device, a broadcast message transmitted by the data collector, and broadcasting, by the master device, the broadcast message using the first frequency band, where the broadcast message is received by the slave device operating on the first frequency band; and switching, by the master device, a current communication frequency band of the master device from the first frequency band to the second frequency band, and broadcasting, by the master device, the broadcast message using the second frequency band, where the broadcast message is received by the slave device operating on the second frequency band.

In a second aspect, a communication control apparatus is provided according to an embodiment of the present disclosure. The communication control apparatus is arranged in a photovoltaic system. In the photovoltaic system, a master device and a slave device are connected to each other via a power line, and the communication control apparatus includes a first communication module and a first control module. The first communication module is configured to enable the master device to communicate with the slave device using a first frequency band and to determine a communication packet loss rate of the slave device for a specified historical time period. The first control module is configured to enable the master device to control the slave device to switch a communication frequency band of the slave device to a second frequency band in response to the communication packet loss rate of the slave device being greater than a predetermined packet loss rate threshold, where the second frequency band is lower than the first frequency band.

In a third aspect, a master device is provided according to an embodiment of the present disclosure. The master device includes a processor and a memory, the memory stores machine-executable instructions executable by the processor, and the processor is configured to execute the machine-executable instructions to implement the communication control method according to any one embodiment of the first aspect.

In a fourth aspect, a slave device is provided according to an embodiment of the present disclosure. The slave device includes a processor and a memory, the memory stores machine-executable instructions executable by the processor, and the slave device is connected to the master device according to the third aspect via a power line.

In a fifth aspect, a photovoltaic system is provided according to an embodiment of the present disclosure. The photovoltaic system includes the master device according to the third aspect and the slave device according to the fourth aspect. The master device is configured to communicate with the slave device using a first frequency band, and determine a communication packet loss rate of the slave device for a specified historical time period. The master device is further configured to control the slave device to switch a communication frequency band of the slave device to a second frequency band in response to the communication packet loss rate of the slave device being greater than a predetermined packet loss rate threshold, where the second frequency band is lower than the first frequency band.

The master device is connected to a data collector in the photovoltaic system, and the slave device is connected to an inverter in the photovoltaic system.

The number of the slave device is more than one. The master device is further configured to: in response to a communication packet loss rate of a first device among the slave devices being greater than the predetermined packet loss rate threshold, control the first device to switch a communication frequency band of the first device to the second frequency band, while maintaining at least one other slave device on the first frequency band.

The master device is further configured to communicate with the first device using the second frequency band and communicate with the at least one other slave device using the first frequency band.

The master device is further configured to: transmit a communication message to the slave device using the first frequency band and initiate timing; and wait to receive a response message from the slave device to the communication message within a predetermined timeout period.

The master device is further configured to: obtain, for the specified historical time period, a volume of communication messages transmitted to the slave device and a volume of received response messages to the communication messages, and determine the communication packet loss rate of the slave device based on a ratio of the volume of the received response messages to the volume of the communication messages.

The master device is further configured to transmit a frequency band configuration instruction to the first device. The first device is configured to receive the frequency band configuration instruction and switch the communication frequency band of the first device to the second frequency band. The master device is further configured to store a correspondence between a device address associated with the first device and the second frequency band.

The master device is further configured to: generate a correspondence between device addresses associated with the slave devices and respective communication frequency bands, where in an initial state, each of the communication frequency bands in the correspondence is configured to the first frequency band; and update, for the correspondence, the communication frequency band corresponding to the device address associated with the first device to the second frequency band, after transmitting the frequency band configuration instruction to the first device.

The master device is further configured to: obtain a to-be-transmitted message and extract a target device address from the to-be-transmitted message; determine a target communication frequency band corresponding to the target device address from a correspondence between device addresses associated with the slave devices and respective communication frequency bands, where in the correspondence, a device address associated with the first device is stored in association with the second frequency band, and a device address associated with the at least one other slave device is stored in association with the first frequency band; transmit the to-be-transmitted message to the slave device associated with the target device address by using the first frequency band, in response to the target communication frequency band being the first frequency band; and transmit the to-be-transmitted message to the first device associated with the target device address by using the second frequency band, in response to the target communication frequency band being the second frequency band.

The master device is further configured to: obtain a current communication frequency band of the master device, in response to the target communication frequency band being the first frequency band; and switch, in response to the current communication frequency band being the second frequency band, the current communication frequency band from the second frequency band to the first frequency band, and transmit the to-be-transmitted message to the slave device associated with the target device address by using the first frequency band.

The master device is further configured to: obtain a current communication frequency band of the master device, in response to the target communication frequency band being the second frequency band; and switch, in response to the current communication frequency band being the first frequency band, the current communication frequency band from the first frequency band to the second frequency band, and transmit the to-be-transmitted message to the first device associated with the target device address by using the second frequency band.

The master device is further communicatively connected to a host computer. The master device is further configured to: receive a relationship configuration instruction transmitted by the host computer, and obtain a to-be-configured device and a to-be-configured frequency band from the relationship configuration instruction, and update, for the correspondence, the communication frequency band corresponding to a device address associated with the to-be-configured device to the to-be-configured frequency band.

The master device is further communicatively connected to a data collector in the photovoltaic system. The master device is further configured to obtain a broadcast message transmitted by the data collector and broadcast the broadcast message using the first frequency band. The slave device operating on the first frequency band is configured to receive the broadcast message. The master device is further configured to switch a current communication frequency band of the master device from the first frequency band to the second frequency band, and broadcast the broadcast message using the second frequency band. The slave device operating on the second frequency band is configured to receive the broadcast message.

Embodiments of the present disclosure achieve at least following beneficial effects.

According to the communication control method and apparatus, the master device, the slave device, and the photovoltaic system, the communication control method is applied to the photovoltaic system. In the photovoltaic system, a master device and a slave device are connected to each other via a power line. The communication control method includes: communicating, by the master device, with the slave device using a first frequency band; determining, by the master device, a communication packet loss rate of the slave device for a specified historical time period; and controlling, by the master device in response to the communication packet loss rate of the slave device being greater than a predetermined packet loss rate threshold, the slave device to switch a communication frequency band of the slave device to a second frequency band, where the second frequency band is lower than the first frequency band.

In this way, when the master device communicates with the slave device, in response to the communication packet loss rate of the slave device being high, the communication frequency band of the slave device is automatically switched to a low frequency band. Thus, the master device communicates with the slave device using the low frequency band, thereby reducing the communication packet loss rate and enhancing stability of communication quality.

Other features and advantages of the present disclosure are described in the subsequent specification and, in part, become apparent from the specification or are understood by implementing the present disclosure. The purpose and other advantages of the present disclosure can be realized and obtained through the specification, the claims, and the structure specially pointed out in the drawings.

Preferred embodiments are described below in detail with reference to the drawings so that the above objects, features and advantages of the present disclosure are readily understandable.

### BRIEF DESCRIPTION OF THE DRAWINGS

Hereinafter drawings to be used in the description of the embodiments of the present disclosure or the conventional technology are briefly described, in order to clarify illustration of technical solutions according to the embodiments of the present disclosure or in the conventional technology. Apparently, the drawings in the following description only illustrate some embodiments of the present disclosure, and other drawings may be obtained by those skilled in the art based on the provided drawings without exerting creative efforts.
FIG. 1 is a schematic diagram illustrating a type of a power line according to an embodiment of the present disclosure;
FIG. 2 is a schematic diagram illustrating a communication network within an array according to an embodiment of the present disclosure;
FIG. 3 is a flowchart of a communication control method according to an embodiment of the present disclosure;
FIG. 4 is a schematic diagram illustrating a connection manner between a master device and a slave device according to an embodiment of the present disclosure;
FIG. 5 is a schematic diagram illustrating a correspondence between device addresses and communication frequency bands according to an embodiment of the present disclosure;
FIG. 6 is a flowchart of establishing, based on a packet loss rate feedback, a correspondence according to an embodiment of the present disclosure;
FIG. 7 is a flowchart of transmitting a communication message by a master device according to an embodiment of the present disclosure;
FIG. 8 is a schematic structural diagram of a communication control apparatus according to an embodiment of the present disclosure;
FIG. 9 is a schematic diagram of a master device according to an embodiment of the present disclosure; and
FIG. 10 is a schematic structural diagram of a photovoltaic system according to an embodiment of the present disclosure.

### DETAILED DESCRIPTION

In order to make objectives, technical solutions, and advantages of the embodiments of the present disclosure more clear, the technical solutions of the present disclosure are clearly and completely described below with reference to the drawings. It is apparent that the embodiments described herein are only some embodiments of the present disclosure, rather than all the embodiments. Any other embodiments obtained by those skilled in the art based on the embodiments in the present disclosure without any creative work fall in the scope of the present disclosure.

In the related art, due to cost savings of eliminating communication cables and labor required for specific installation, PLC (Power Line Communication) has gradually replaced traditional RS485 communication for inverters and has become mainstream communication for photovoltaic inverters within a power station. PLC networks may use multiple frequency bands, and the frequency bands are primarily categorized into two types based on frequency ranges: a high frequency band (such as, 2-6MHz) and a low frequency band (such as, 0.3-2MHz).

Although PLC offers convenient communication, it may cause communication instability for the following reasons.

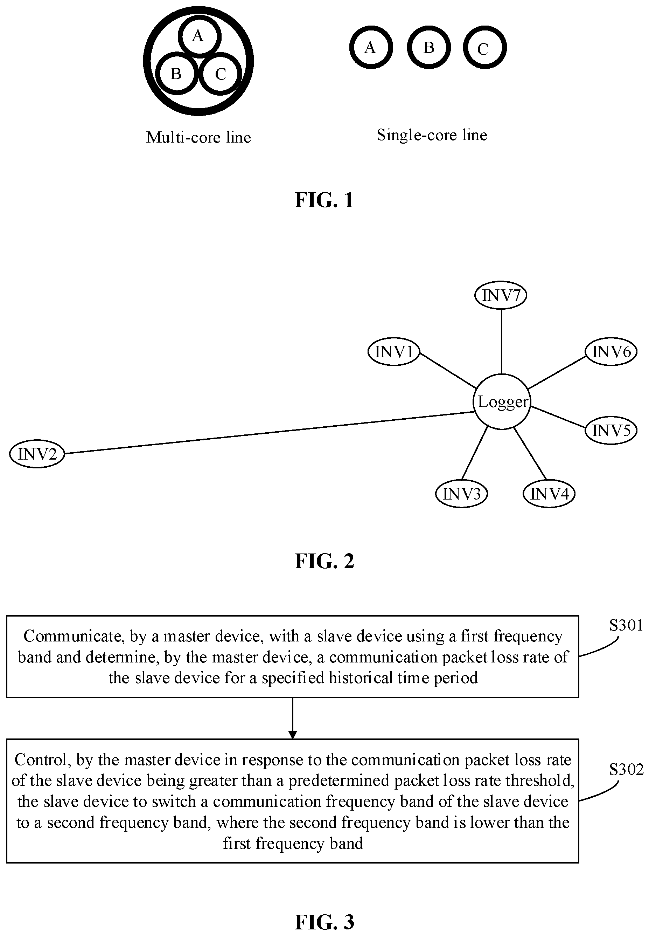

On one hand, a communication medium is a power line for an inverter, the power line carries noise from both the power grid and the inverter, and the type and material of the power line also pose significant challenges to communication stability. The power line typically includes: a single-core copper line, a single-core aluminum line, a multi-core copper line, and a multi-core aluminum line. As shown in FIG. 1, a multi-core line experiences low PLC signal loss due to a bundled configuration, and single-core lines, where A, B, and C wires are completely separated, may suffer significant PLC signal loss at an inverter node if bundling is not proper.

On the other hand, construction locations of some power stations result in an excessively long distance between inverters, ultimately causing high PLC signal attenuation. As a result, PLC communication is unstable and a packet loss rate is high.

Particularly, during the construction of mountain power stations, due to terrain constraints such as steep slopes and difficult construction, it is common for an inverter within the same array to be located at the foot of a mountain or on the opposite side of a slope relative to other inverters, and a distance between the inverter and other inverters exceeds a distance recommended in construction standards. In this case, for a frequency band used by the array, an excessively high packet loss rate may occur, or an inverter may be disconnected, forming an information silo. As shown in FIG. 2, a communication network within an array comprises a data collector (Logger) and multiple inverters. A PLC master device is embedded within the Logger, while a PLC slave device is embedded within a corresponding inverter of the inverters. A long distance between the inverter INV2 and the Logger causes an excessive attenuation of the PLC signal.

For the two issues of excessive signal attenuation, a PLC frequency band within the communication network is typically lowered to a low frequency band to achieve greater transmit signal strength, but a crosstalk issue may occur.

Based on the above issues, a communication control method and apparatus, a master device, a slave device, and a photovoltaic system which are applicable to power line communication are provided according to embodiments of the present disclosure.

FIG. 3 is a flowchart of a communication control method according to an embodiment of the present disclosure. The communication control method is provided according to the present disclosure, and the communication control method is applied to a master device in the power line communication. The master device is connected to a slave device via a power line. There may be one or more master devices and one or more slave devices.

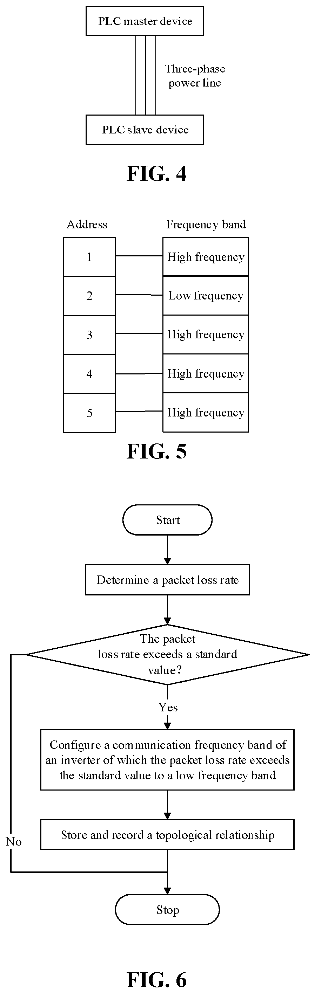

In an example, as shown in FIG. 4, the master device and slave device are connected to each other via a three-phase power line. The communication control method includes steps S301 to S302.

In step S301, the master device communicates with the slave device using a first frequency band and determines a communication packet loss rate of the slave device for a specified historical time period.

The first frequency band is typically configured to a high frequency band. The specified historical time period refers to a time period after the power-on of a power device, where "power-on" means a process of turning on a power supply to energize and start the device. The communication packet loss rate may be defined as a ratio of a quantity of lost packets to a total quantity of transmitted packets. In normal cases, the communication packet loss rate should be controlled within a certain range.

For example, the master device communicates with the slave device by using the first frequency band. After the power device is powered on, the communication packet loss rate of the slave device is determined every 30 minutes. That is, at each determination time point, the communication packet loss rate is determined for a 30-minute period immediately preceding the time point.

In step S302, in response to the communication packet loss rate of the slave device being greater than a predetermined packet loss rate threshold, the master device controls the slave device to switch a communication frequency band of the slave device to a second frequency band, where the second frequency band is lower than the first frequency band.

Each inverter device corresponds to one slave device. The predetermined packet loss rate threshold is a predetermined percentage. The second frequency band is typically configured to a low frequency band.

In other words, in a case that the communication packet loss rate of a slave device is greater than the predetermined packet loss rate threshold, the slave device is controlled to switch the communication frequency band of the slave device from the first frequency band to the second frequency band lower than the first frequency band.

In practice, in a case that the communication packet loss rate of the slave device exceeds a standard value of 5%, it is generally considered that a communication signal suffers significant attenuation and severe packet loss. In this case, if the communication frequency band of the slave device is a high frequency band, the slave device is controlled to switch the communication frequency band of the slave device from the high frequency band to a low frequency band.

The above communication control method is applied to a photovoltaic system, where a master device and a slave device are connected to each other via a power line. The communication control method includes: communicating, by the master device, with the slave device using a first frequency band; determining, by the master device, a communication packet loss rate of the slave device for a specified historical time period; and controlling, by the master device in response to the communication packet loss rate of the slave device being greater than a predetermined packet loss rate threshold, the slave device to switch a communication frequency band of the slave device to a second frequency band, where the second frequency band is lower than the first frequency band.

In this way, when the master device communicates with the slave device, in response to the communication packet loss rate of the slave device being high, the communication frequency band of the slave device is automatically switched to a low frequency band. Thus, the master device communicates with the slave device using the low frequency band, thereby reducing the communication packet loss rate and enhancing stability of communication quality.

In an embodiment, the number of the slave device is more than one. When switching the communication frequency band of the slave device, in response to a communication packet loss rate of a first device among the slave devices being greater than the predetermined packet loss rate threshold, the master device controls the first device to switch a communication frequency band of the first device to the second frequency band, while maintaining at least one other slave device on the first frequency band.

In other words, multiple slave devices are connected to the master device via power lines. In a case that the communication packet loss rate of the first device among the slave devices is greater than the predetermined packet loss rate threshold, the master device controls the first device to switch the communication frequency band of the first device from the first frequency band to the second frequency band lower than the first frequency band, while maintaining the at least one other slave device on the first frequency band.

In practice, in a case that the communication packet loss rate of the first device exceeds a standard value of 5%, it is generally considered that a communication signal suffers significant attenuation and severe packet loss. In this case, if the communication frequency band of the first device is a high frequency band, the first device is controlled to switch the communication frequency band from the high frequency band to a low frequency band, while the at least one other slave device is maintained on the high frequency band.

In an embodiment, the master device communicates with the first device using the second frequency band and communicates with the at least one other slave device using the first frequency band.

In other words, multiple slave devices are connected to the master device via power lines. After the master device controls the first device to switch the communication frequency band of the first device among the slave devices to the second frequency band in a case that the communication packet loss rate of the first device is greater than the predetermined packet loss rate threshold, the master device communicates with the first device using the second frequency band. Furthermore, the master device communicates with the at least one other slave device using the first frequency band.

In an example, after the master device controls the first device to switch the communication frequency band of the first device among the slave devices to the low frequency band in a case that the packet loss rate of the first device exceeds a standard value of 5%, the master device communicates with the first device using the low frequency band and communicates with the at least one other slave device using the high frequency band.

In an embodiment, the master device transmits a communication message to the slave device using the first frequency band and initiates timing. Within a predetermined timeout period, the master device waits to receive a response message from the slave device to the communication message.

The communication message is typically a Modbus message. Modbus is an application-layer message transfer protocol.

In practice, the master device and the slave device are connected over the same communication link. When the master device transmits a communication message to the slave device by using the first frequency band, timing is initiated. The master device then waits to receive a response message from the slave device to the communication message within the predetermined timeout period. In a case that no response message is received by the master device within the predetermined timeout period, it is determined that a packet loss has occurred, that is, a data packet is lost.

In an example, after the master device transmits a communication message to the slave device by using the high frequency band, timing is initiated for a 2-second timeout period. During the 2-second timeout period, the master device keeps operating on the high frequency band, waiting for a response message from the slave device to the communication message.

It should be noted that the communication frequency band used by the master device for transmitting the communication message and receiving the response message is consistent with the communication frequency band used by the slave device for receiving the communication message and transmitting the response message.

Further, the master device obtains, for the specified historical time period, a volume of communication messages transmitted to the slave device and a volume of received response messages to the communication messages; and the master device determines the communication packet loss rate of the slave device based on a ratio of the volume of the received response messages to the volume of the communication messages.

The volume of the communication messages refers to a quantity of the communication messages and the volume of the response messages refers to a quantity of the response messages.

In other words, for each slave device, the master device obtains a communication message volume tx of communication messages transmitted to the slave device and a response message volume rx of received response messages to the communication messages for the specified historical time period, calculates a ratio of the response message volume rx to the communication message volume tx, and subtracts the ratio from 1 to obtain the communication packet loss rate of the slave device.

For example, for each slave device, during first 30-minute period after the power-on of the power device and thereafter within every 30-minute period, the master device counts the communication messages transmitted to the slave device and the response messages from the slave device, thereby calculating the communication packet loss rate = 1 - rx/tx.

Further, the master device transmits a frequency band configuration instruction to the first device. The first device receives the frequency band configuration instruction and switches the communication frequency band of the first device to the second frequency band. The master device stores a correspondence between a device address associated with the first device and the second frequency band.

The frequency band configuration instruction refers to a special instruction transmitted by the master device to the first device for controlling the first device to change the communication frequency band. The device address is a communication address of an inverter device corresponding to the first device.

In other words, after the master device transmits the frequency band configuration instruction to the first device, the first device receives the frequency band configuration instruction to switch a current communication frequency band of the first device to the second frequency band. Furthermore, the master device records and stores the correspondence between the device address associated with the first device and the second frequency band. The correspondence represents a topological relationship, which denotes a spatial interconnection and adjacency between the device addresses and the communication frequency bands.

For example, the correspondence between the device addresses associated with the slave devices and the communication frequency bands is shown in FIG. 5. The device address associated with the slave device is a first address in the communication message, essentially a number assigned to a corresponding inverter device.

In an example, suppose that the slave device corresponding to a No.2 inverter device experiences severe packet loss and significant signal attenuation, and a current communication frequency band of the slave device corresponding to the No.2 inverter device is the high frequency band, the master device transmits the frequency band configuration instruction to the slave device corresponding to the No.2 inverter device. Upon receiving the frequency band configuration instruction, the first device switches the communication frequency band of the slave device corresponding to the No.2 inverter device from the high frequency band to the low frequency band, as shown in FIG. 5. Moreover, the master device stores a correspondence between a device address associated with the No.2 inverter device and the low frequency band. For example, the correspondence is stored in a flash memory (that is, FLASH EEPROM) to achieve power-off memory functionality. The power-off memory functionality enables instant storage of various operational states after a sudden power-off of the power device, and resumption of operation according to the stored operational states upon power-on of the power device.

In an embodiment, before transmitting the frequency band configuration instruction, the master device generates a correspondence between device addresses associated with the slave devices and respective communication frequency bands. In an initial state, each of the communication frequency bands in the correspondence is configured to the first frequency band. When establishing the correspondence between the device address and the communication frequency band, the master device updates, for the correspondence, the communication frequency band corresponding to the device address associated with the first device to the second frequency band.

First, before transmitting the frequency band configuration instruction to the first device, the master device pre-generates the correspondence between the device addresses associated with the slave devices and the communication frequency bands.

It should be noted that in the initial state, all the communication frequency bands corresponding to the device addresses associated with the slave devices are the first frequency band. For example, all the communication frequency bands in the correspondence are the high frequency band.

Subsequently, when the first device completes a switch of the frequency band, the master device stores the correspondence between the device address associated with the first device and the second frequency band. At this time, the master device may search the correspondence for the device address associated with the first device and update the communication frequency band corresponding to the device address associated with the first device to the second frequency band. As shown in the example in FIG. 5, the master device may search the correspondence for the No.2 inverter device address associated with the first device from the correspondence and then configure the communication frequency band corresponding to the No.2 inverter device address associated with the first device to the low frequency band.

In an embodiment, a flowchart of establishing, based on a packet loss rate feedback, a correspondence is shown in FIG. 6. Steps of the flowchart are described below.
1) A system is powered on, and a PLC master device periodically determines a packet loss rate at 30-minute intervals;
2) The PLC master device determines, for each inverter device, a message volume (Tx) of messages transmitted to the inverter device and a message volume (Rx) of messages received from the inverter device, to calculate the packet loss rate = Rx/Tx. When the packet loss rate exceeds a standard value of 5%, it indicates significant signal attenuation and severe packet loss. In this case, the communication frequency band of the inverter device is required to be switched to the low frequency band.
3) The master device changes the PLC frequency band of the inverter to the low frequency band through the frequency band configuration instruction. Moreover, the master device records the correspondence between the inverter address and the frequency band, and stores the correspondence in the flash memory.
4) After being powered on again or reset, the master device automatically reads the stored topology relationship.

After the frequency band is configured, upon receiving a message transmitted by the data collector, the PLC master device needs to determine a first address in the message and determine the communication frequency band based on the stored correspondence.

In an embodiment, the master device obtains a to-be-transmitted message and extracts a target device address from the to-be-transmitted message. The master device then determines a target communication frequency band corresponding to the target device address from a correspondence between device addresses associated with the slave devices and respective communication frequency bands. In the correspondence, a device address associated with the first device is stored in association with the second frequency band, and a device address associated with the at least one other slave device is stored in association with the first frequency band. In response to the target communication frequency band being the first frequency band, the master device transmits the to-be-transmitted message to the slave device associated with the target device address by using the first frequency band. In response to the target communication frequency band being the second frequency band, the master device transmits the to-be-transmitted message to the first device associated with the target device address by using the second frequency band.

The target device address refers to a device address of a target inverter device. The above target communication frequency band refers to a communication frequency band that the master device needs to employ when transmitting the to-be-transmitted message to a corresponding slave device.

First, the master device obtains a to-be-transmitted message and extracts a target device address from the to-be-transmitted message.

For example, the master device receives all Modbus messages transmitted from the data collector and extracts corresponding first addresses from the to-be-transmitted messages.

Next, the master device determines a target communication frequency band corresponding to the target device address from the correspondence between the device addresses associated with the slave devices and the communication frequency bands. In the correspondence, the device address associated with the first device is stored in association with the second frequency band, and the device address associated with the at least one other slave device is stored in association with the first frequency band.

In an example, the correspondence between the device addresses associated with the slave devices and the communication frequency bands is shown in FIG. 5. The master device determines the target communication frequency band as the high frequency band or the low frequency band from the correspondence. Assuming that the slave device corresponding to the No.2 inverter device is the first device, the device address associated with the No.2 inverter device is stored in association with the low frequency band. And, the device addresses associated with the slave devices, which are corresponding to No.1 and No.3 to No.5 inverter devices other than the No.2 inverter device, are stored in association with the high frequency band.

Further, the master device transmits the to-be-transmitted message to the slave device based on the target communication frequency band. If the target communication frequency band is the first frequency band, the master device transmits the to-be-transmitted message to the slave device associated with the target device address by using the first frequency band. If the target communication frequency band is the second frequency band, the master device transmits the to-be-transmitted message to the first device associated with the target device address by using the second frequency band.

In an example shown in FIG. 5, if the target communication frequency band is the high frequency band, the master device transmits the to-be-transmitted message to the slave device associated with the device address of the inverter No. 1, 3, 4 or 5 by using the high frequency band. If the target communication frequency band is the low frequency band, the master device transmits the to-be-transmitted message to the slave device associated with the device address of the inverter No. 2 by using the low frequency band.

It can be understood that when the target communication frequency band corresponding to the target device address differs from a current communication frequency band of the master device, the communication frequency band of the master device is required to be switched.

In an embodiment, in response to the target communication frequency band being the first frequency band, the master device obtains a current communication frequency band of the master device. In response to the current communication frequency band being the second frequency band, the master device switches the current communication frequency band from the second frequency band to the first frequency band and transmits the to-be-transmitted message to the slave device associated with the target device address by using the first frequency band.

In other words, when the target communication frequency band corresponding to the target device address is the first frequency band, the master device obtains a current communication frequency band of the master device. Then, if the current communication frequency band is the second frequency band, the master device switches the current communication frequency band from the second frequency band to the first frequency band and transmits the to-be-transmitted message to the slave device associated with the target device address by using the first frequency band.

For example, when the communication frequency band corresponding to the first address extracted from the to-be-transmitted message is the high frequency band, the master device obtains the current communication frequency band of the master device. If the current communication frequency band is the low frequency band, the master device switches the current communication frequency band from the low frequency band to the high frequency band and transmits the to-be-transmitted message to the slave device associated with the first address by using the high frequency band.

Similarly, in response to the target communication frequency band being the second frequency band, the master device obtains a current communication frequency band of the master device. In response to the current communication frequency band being the first frequency band, the master device switches the current communication frequency band from the first frequency band to the second frequency band and transmits the to-be-transmitted message to the first device associated with the target device address by using the second frequency band.

In other words, when the target communication frequency band corresponding to the target device address is the second frequency band, the master device obtains the current communication frequency band of the master device. Then, if the current communication frequency band is the first frequency band, the master device switches the current communication frequency band from the first frequency band to the second frequency band and transmits the to-be-transmitted message to the slave device associated with the target device address by using the second frequency band.

For example, when the communication frequency band corresponding to the first address extracted from the to-be-transmitted message is the low frequency band, the master device obtains the current communication frequency band of the master device. If the current communication frequency band is the high frequency band, the master device switches the current communication frequency band from the high frequency band to the low frequency band and transmits the to-be-transmitted message to the slave device associated with the first address by using the low frequency band.

In addition, the correspondence between the device addresses and the communication frequency bands may be established not only automatically through the packet loss rate feedback, as described above, but also manually via a relationship configuration instruction.

In an embodiment, the master device is further communicatively connected to a host computer. The master device receives a relationship configuration instruction transmitted by the host computer, obtains a to-be-configured device and a to-be-configured frequency band from the relationship configuration instruction, and for the correspondence, updates the communication frequency band corresponding to a device address associated with the to-be-configured device to the to-be-configured frequency band.

The above relationship configuration instruction is manually configured. For example, when the master device is connected to the host computer, an operator may use a USB-to-RS485 serial port driver to emulate a traditional serial port via a USB interface of a terminal. In this way, a connection and communication between a programming cable and a power line communication device is achieved, and thus the operator can configure parameters of the relationship configuration instruction.

In an implementation, the master device receives a relationship configuration instruction transmitted by the host computer, and obtains a to-be-configured device and a to-be-configured frequency band from the relationship configuration instruction. Subsequently, for the correspondence between the device addresses and the communication frequency bands, the master device updates the communication frequency band corresponding to a device address associated with the to-be-configured device to the to-be-configured frequency band.

In an embodiment, the master device may be further connected to a data collector. An operator accesses the data collector via a network to configure the parameters of the relationship configuration instruction. In this case, the master device receives a relationship configuration instruction transmitted through a network human-machine interface of the data collector and obtains a to-be-configured device and a to-be-configured frequency band. Subsequently, for the correspondence between the device addresses and the communication frequency bands, the master device updates the communication frequency band corresponding to a device address associated with the to-be-configured device to the to-be-configured frequency band.

It should be noted that the correspondence between the device addresses and the communication frequency bands may be stored in the master device or transmitted to the master device via the data collector.

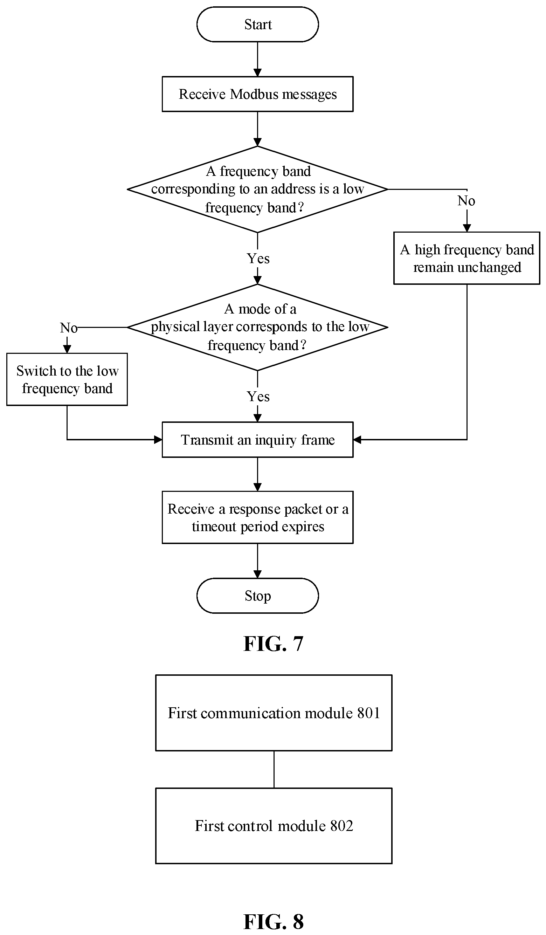

In an embodiment, a flowchart of transmitting a communication message by a master device is shown in FIG. 7. Steps of the flowchart are described below.
1) When a first address in the message corresponds to the number of a problematic inverter with severe packet loss, the PLC master device switches a communication frequency band for transmitting the message to the low frequency band. After switching, the PLC master device passes the data packet to its physical layer, where it is transmitted over a power line via RF processing.
2) Upon receiving the corresponding low frequency signal, the PLC slave device located at the inverter demodulates the signal. After demodulation, the slave device replies a response message to the PLC master device, and then the PLC master device forwards the response message to the data collector.
3) In a case that packet loss occurs, the PLC master device remains on the current frequency band for a maximum duration of 2 seconds.
4) The master device receives a next message. In a case that the first address in the message corresponds to an inverter, the PLC physical layer switches the communication frequency band to a respective frequency band.

In an embodiment, the master device is further communicatively connected to a data collector in a photovoltaic system. The master device obtains a broadcast message transmitted by the data collector and broadcasts the broadcast message using the first frequency band. The slave device operating on the first frequency band receives the broadcast message. The master device switches a current communication frequency band of the master device from the first frequency band to the second frequency band, and broadcasts the broadcast message using the second frequency band. The slave device operating on the second frequency band receives the broadcast message.

The above broadcast message does not carry a target device address, that is, its first address field is set to zero.

In practice, different slave devices generally operate on different communication frequency bands. Therefore, when broadcasting the communication message, the master device typically switches its current communication frequency band to match the communication frequency band of the slave device intended to receive the broadcast message.

First, the master device is connected to the data collector within the photovoltaic system. The master device receives a broadcast message transmitted by the data collector and broadcasts the broadcast message by using the first frequency band, so that slave devices operating on the first frequency band receive the broadcast message.

Subsequently, after switching its communication frequency band from the first frequency band to the second frequency band, the master device broadcasts the broadcast message by using the second frequency band, so that slave devices operating on the second frequency band receive the broadcast message.

For example, when receiving the broadcast message transmitted by the data collector, the master device determines that the first address field is zero and transmits the broadcast message to all slave devices. In this case, the master device broadcasts the broadcast message by using the high frequency band, so that the slave device operating on the high frequency band receives the broadcast message. Subsequently, the master device switches the communication frequency band from the high frequency band to the low frequency band and broadcasts the broadcast message by using the low frequency band, so that the slave device operating on the low frequency band receives the broadcast message.

With the communication control method, it is not necessary to manually adjust positions of the power line or a machine. By automatically selecting the frequency band, the packet loss rate is reduced and communication quality is enhanced, thereby ensuring communication stability and minimizing crosstalk interference.

For the above method embodiments, reference is further made to a schematic structural diagram of a communication control apparatus shown in FIG. 8. The communication control apparatus is arranged in a photovoltaic system. In the photovoltaic system, a master device and a slave device are connected to each other via a power line. The communication control apparatus includes a first communication module 801 and a first control module 802.

The first communication module 801 is configured to enable the master device to communicate with the slave device using a first frequency band and to determine a communication packet loss rate of the slave device for a specified historical time period.

The first control module 802 is configured to enable the master device to control the slave device to switch a communication frequency band of the slave device to a second frequency band in response to the communication packet loss rate of the slave device being greater than a predetermined packet loss rate threshold, where the second frequency band is lower than the first frequency band.

In this way, when the master device communicates with the slave device, in response to the communication packet loss rate of the slave device being high, the communication frequency band of the slave device is automatically switched to a low frequency band. Thus, the master device communicates with the slave device using the low frequency band, thereby reducing the communication packet loss rate and enhancing stability of communication quality.

The number of the slave device is more than one. The first control module is further configured to enable the master device to, in response to a communication packet loss rate of a first device among the slave devices being greater than the predetermined packet loss rate threshold, control the first device to switch a communication frequency band of the first device to the second frequency band, while maintaining at least one other slave device on the first frequency band.

The above communication control apparatus further includes a second communication module. The second communication module is configured to enable the master device to communicate with the first device using the second frequency band and communicate with the at least one other slave device using the first frequency band.

The above first communication module is further configured to enable the master device to transmit a communication message to the slave device using the first frequency band and initiate timing, and wait to receive a response message from the slave device to the communication message within a predetermined timeout period.

The above first communication module is further configured to enable the master device to obtain, for the specified historical time period, a volume of communication messages transmitted to the slave device and a volume of received response messages to the communication messages, and to determine the communication packet loss rate of the slave device based on a ratio of the volume of the received response messages to the volume of the communication messages.

The above first control module is further configured to enable the master device to transmit a frequency band configuration instruction to the first device, where in response to the frequency band configuration instruction, the communication frequency band of the first device is switched to the second frequency band by the first device; and enable the master device to store a correspondence between a device address associated with the first device and the second frequency band.

The above communication control apparatus further includes a first generation module. The first generation module is configured to enable the master device to generate a correspondence between device addresses associated with the slave devices and respective communication frequency bands. In an initial state, each of the communication frequency bands in the correspondence is configured to the first frequency band. The above first control module is further configured to enable the master device to update, for the correspondence, the communication frequency band corresponding to the device address associated with the first device to the second frequency band.

The second communication module is further configured to enable the master device to obtain a to-be-transmitted message and extract a target device address from the to-be-transmitted message; to determine a target communication frequency band corresponding to the target device address from a correspondence between device addresses associated with the slave devices and respective communication frequency bands, where in the correspondence, a device address associated with the first device is stored in association with the second frequency band, and a device address associated with the at least one other slave device is stored in association with the first frequency band; transmit the to-be-transmitted message to the slave device associated with the target device address by using the first frequency band, in response to the target communication frequency band being the first frequency band; and transmit the to-be-transmitted message to the first device associated with the target device address by using the second frequency band, in response to the target communication frequency band being the second frequency band.

The above second communication module is further configured to enable the master device to obtain a current communication frequency band of the master device, in response to the target communication frequency band being the first frequency band; and switch, in response to the current communication frequency band being the second frequency band, the current communication frequency band from the second frequency band to the first frequency band, and transmit the to-be-transmitted message to the slave device associated with the target device address by using the first frequency band.

The second communication module is further configured to enable the master device to obtain a current communication frequency band of the master device, in response to the target communication frequency band being the second frequency band; and switch, in response to the current communication frequency band being the first frequency band, the current communication frequency band from the first frequency band to the second frequency band, and transmit the to-be-transmitted message to the first device associated with the target device address by using the second frequency band.

The master device is further communicatively connected to a host computer. The above communication control apparatus further includes a first update module. The first update module is configured to enable the master device to receive a relationship configuration instruction transmitted by the host computer, obtain a to-be-configured device and a to-be-configured frequency band from the relationship configuration instruction, and update, for the correspondence, the communication frequency band corresponding to a device address associated with the to-be-configured device to the to-be-configured frequency band.

The above master device is further communicatively connected to a data collector in the photovoltaic system. The above communication control apparatus further includes a first broadcasting module. The first broadcasting module is configured to enable the master device to obtain a broadcast message transmitted by the data collector and broadcast the broadcast message using the first frequency band, where the broadcast message is received by the slave device operating on the first frequency band; and enable the master device to switch a current communication frequency band of the master device from the first frequency band to the second frequency band, and broadcast the broadcast message using the second frequency band, where the broadcast message is received by the slave device operating on the second frequency band.

A master device is further provided according to an embodiment of the present disclosure. The master device includes a processor and a memory. The memory stores machine-executable instructions executable by the processor. The processor is configured to execute the machine-executable instructions to implement the above communication control method. The master device may be a server, or a terminal device.

A slave device is further provided according to an embodiment of the present disclosure. The slave device includes a processor and a memory. The memory stores machine-executable instructions executable by the processor. The slave device is connected to the master device via a power line.

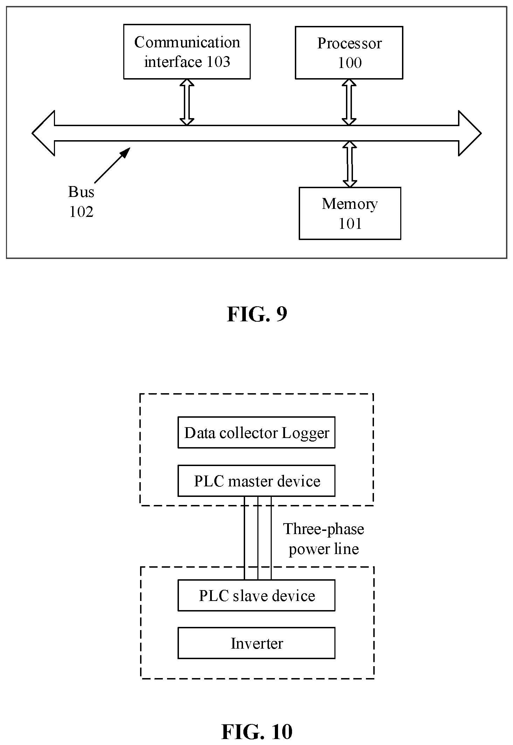

Referring to FIG. 9, an electronic device includes a processor 100 and a memory 101. The memory 101 stores machine-executable instructions executable by the processor 100. The processor 100 is configured to execute the machine-executable instructions to implement the above communication control method.

Further, the electronic device shown in FIG. 9 further includes a bus 102 and a communication interface 103. The processor 100, the communication interface 103, and the memory 101 are connected via the bus 102.

The memory 101 may include a high-speed random access memory (RAM) and may also include a non-volatile memory, for example, at least one disk memory. The network element of the system communicates with at least one other network element through at least one communication interface 103 (which may be wired or wireless). The Internet, wide area network, local network, metropolitan area network and the like may be used. The bus 102 may be an ISA bus, PCI bus, EISA bus or the like. The bus may include an address bus, a data bus, or a control bus. For ease of representation, the bus is illustrated by one bi-directional arrow in FIG. 9, which, however, does not mean that there is only one bus or one type of bus.

The processor 100 may be an integrated circuit chip having a signal processing capability. During an implementation process, steps of the above method may be implemented by an integrated logic circuit in a form of hardware in the processor 100 or through software instructions. The processor 100 may be a general processor such as a central processing unit (CPU) and a network processor (NP). The processor 100 may also be a digital signal processing (DSP), an application specific integrated circuit (ASIC), a field-programmable gate array (FPGA) or other programmable logic devices, a discrete gate or transistor logic device, or a discrete hardware component. Various methods, steps, and logical block diagrams disclosed in the embodiments of the present disclosure may be implemented or performed. The general-purpose processor may be a microprocessor, or may be any conventional processors. Steps of the method according to the embodiments of the present disclosure may be directly implemented by a hardware decoding processor, or implemented by a combination of hardware and software modules in the decoding processor. The software module may be in a well-established storage medium in the art such as a random access memory, a flash memory, a read-only memory, a programmable read-only memory, an electrically erasable programmable memory, or a register. The storage medium is located in the memory 101, and the processor 100 reads information in the memory 101 and performs the above method in combination with hardware.

A photovoltaic system includes multiple arrays, which are also referred to as subarrays. Each of the arrays includes a data collector, an inverter, and a box-type transformer. For a photovoltaic sub-array with the box-type transformer as a basic unit, a PLC communication module installed at a photovoltaic inverter is referred to as a PLC slave device, and a PLC communication module installed on a side of the box-type transformer is referred to as a PLC master device.

Both the data collector and the master device are installed within a communication cabinet on the side of the box-type transformer. The data collector and the PLC master device installed on the side of the box-type transformer communicate with each other via a wired connection, such as RS485. The data collector transmits an instruction to the PLC master device. The PLC master device modulates the instruction into a carrier signal and transmits the carrier signal via an inverter alternating current power line on the low-voltage side of the box-type transformer to an inverter end, that is, the PLC slave device. The PLC slave device demodulates the carrier signal back into the instruction and transmits the instruction to the inverter for execution. When the inverter uploads data, the data transmission process is similar to the instruction transmission process. The PLC slave device modulates inverter data into a carrier signal and transmits the carrier signal via the inverter alternating current power line to the low-voltage side of the box-type transformer and the PLC master device. The PLC master device demodulates the carrier signal into the inverter data and transmits the inverter data to the data collector, thereby achieving bidirectional communication.

In view of this, a photovoltaic system is further provided according to an embodiment of the present disclosure. As shown in FIG. 10, the photovoltaic system includes the above master device and slave device. The master device is configured to communicate with the slave device using a first frequency band, and determine a communication packet loss rate of the slave device for a specified historical time period. The master device is further configured to control the slave device to switch a communication frequency band of the slave device to a second frequency band in response to the communication packet loss rate of the slave device being greater than a predetermined packet loss rate threshold, where the second frequency band is lower than the first frequency band.

The master device is connected to a data collector in the photovoltaic system, and the slave device is connected to an inverter in the photovoltaic system.

The number of the slave device is more than one. The master device is further configured to: in response to a communication packet loss rate of a first device among the slave devices being greater than the predetermined packet loss rate threshold, control the first device to switch a communication frequency band of the first device to the second frequency band, while maintaining at least one other slave device on the first frequency band.

The master device is further configured to communicate with the first device using the second frequency band and communicate with the at least one other slave device using the first frequency band.

The master device is further configured to: transmit a communication message to the slave device using the first frequency band and initiate timing; and wait to receive a response message from the slave device to the communication message within a predetermined timeout period.

The master device is further configured to: obtain, for the specified historical time period, a volume of communication messages transmitted to the slave device and a volume of received response messages to the communication messages, and determine the communication packet loss rate of the slave device based on a ratio of the volume of the received response messages to the volume of the communication messages.

The master device is further configured to transmit a frequency band configuration instruction to the first device. The first device is configured to receive the frequency band configuration instruction and switch the communication frequency band of the first device to the second frequency band. The master device is further configured to store a correspondence between a device address associated with the first device and the second frequency band.

The master device is further configured to: generate a correspondence between device addresses associated with the slave devices and respective communication frequency bands, where in an initial state, each of the communication frequency bands in the correspondence is configured to the first frequency band; and update, for the correspondence, the communication frequency band corresponding to the device address associated with the first device to the second frequency band, after transmitting the frequency band configuration instruction to the first device.

The master device is further configured to: obtain a to-be-transmitted message and extract a target device address from the to-be-transmitted message; determine a target communication frequency band corresponding to the target device address from a correspondence between device addresses associated with the slave devices and respective communication frequency bands, where in the correspondence, a device address associated with the first device is stored in association with the second frequency band, and a device address associated with the at least one other slave device is stored in association with the first frequency band; transmit the to-be-transmitted message to the slave device associated with the target device address by using the first frequency band, in response to the target communication frequency band being the first frequency band; and transmit the to-be-transmitted message to the first device associated with the target device address by using the second frequency band, in response to the target communication frequency band being the second frequency band.

The master device is further configured to: obtain a current communication frequency band of the master device, in response to the target communication frequency band being the first frequency band; and switch, in response to the current communication frequency band being the second frequency band, the current communication frequency band from the second frequency band to the first frequency band, and transmit the to-be-transmitted message to the slave device associated with the target device address by using the first frequency band.

The master device is further configured to: obtain a current communication frequency band of the master device, in response to the target communication frequency band being the second frequency band; and switch, in response to the current communication frequency band being the first frequency band, the current communication frequency band from the first frequency band to the second frequency band, and transmit the to-be-transmitted message to the first device associated with the target device address by using the second frequency band.

The master device is further communicatively connected to a host computer. The master device is further configured to: receive a relationship configuration instruction transmitted by the host computer, obtain a to-be-configured device and a to-be-configured frequency band from the relationship configuration instruction, and update, for the correspondence, the communication frequency band corresponding to a device address associated with the to-be-configured device to the to-be-configured frequency band.

The master device is further communicatively connected to a data collector in the photovoltaic system. The master device is further configured to obtain a broadcast message transmitted by the data collector and broadcast the broadcast message using the first frequency band. The slave device operating on the first frequency band is configured to receive the broadcast message. The master device is further configured to switch a current communication frequency band of the master device from the first frequency band to the second frequency band, and broadcast the broadcast message using the second frequency band. The slave device operating on the second frequency band is configured to receive the broadcast message.

For the above photovoltaic system, a correspondence between inverter addresses and frequency band numbers is stored within the master device. Based on the packet loss rate feedback, the master device configures a frequency band of a problematic inverter with severe packet loss to the low frequency band, and maintains all other inverters except the problematic inverter on the default high frequency band. When the data collector queries an address of the problematic inverter, the master device automatically switches the current communication frequency band of the master device to the low frequency band based on the correspondence between the addresses and the frequency bands to transmit a message to the problematic inverter and waits for a response from the problematic inverter. When the data collector queries an address of a normal inverter, the master device automatically switches the current communication frequency band of the master device to the high frequency band. In this way, a significant signal attenuation issue inherent in PLC communication caused by noise in power lines, the type and material of the power lines, or a long distance between communicating devices is addressed, thereby reducing packet loss, enhancing communication quality, ensuring communication stability, and minimizing crosstalk interference.

In addition, in the description of the embodiments of the present disclosure, unless otherwise specified and limited, the terms "installed", "connected", and "connection" should be understood in a broad sense. For example, it may be a fixed connection, a detachable connection, or an integrated connection; it may be a mechanical connection, or may be an electrical connection; it may be a direct connection, or may be indirectly connected by using an intermediate medium, and may be a communication inside two elements. For those skilled in the art, the specific meanings of the terms in the present disclosure can be understood based on specific situations.

In a case that the function is implemented in a form of a software functional unit and sold or used as an independent product, the function may be stored in a computer readable storage medium. Based on such understanding, the technical solution of the present disclosure essentially or a part contributing to the prior art or a part of the technical solution may be embodied in the form of a software product, and the computer software product is stored in a storage medium, and includes multiple instructions for causing a computer device (which may be a personal computer, a server, or a network device) to perform all or part of the steps of the method in the embodiments of the present disclosure. The foregoing storage medium includes various media capable of storing program codes, such as a U disk, a removable hard disk, a read-only memory (ROM), a random-access memory (RAM), a magnetic disk and an optical disk.

In the description of the present disclosure, it should be noted that, the terms "center", "upper", "lower", "left", "right", "vertical", "horizontal", "inner" and "outer", etc., indicate the orientation or positional relationship based on the orientation or positional relationship shown in the drawings, and are only for the convenience of describing the present disclosure and simplifying description, and do not indicate or imply that the device or element referred to must have a specific orientation, be constructed and operated in a specific orientation, therefore, the terms cannot be understood as a limitation of the present disclosure. In addition, terms such as "first", "second", "third" and the like are merely for description, and should not be construed as indicating or implying relative importance.

Finally, it should be noted that the above embodiments are only specific embodiments of the present disclosure and are intended for illustrating technical solutions of the present disclosure rather than limiting them. The protection scope of the present disclosure is not limited to these embodiments. Although the present disclosure has been described in detail with reference to the foregoing embodiments, those skilled in the art may modify or vary the technical solutions described in the foregoing embodiments within a technical scope disclosed herein or may make some equivalent replacements on some technical features. Such modification, variation, or replacements not departing from a spirit and the scope of technical solutions in embodiments of the present disclosure shall fall within the protection scope of the present disclosure. Therefore, the protection scope of the present disclosure shall be in accordance with the protection scope of the claims.

## Claims

1. A communication control method, **characterized in that** the communication control method is applied to a photovoltaic system, in the photovoltaic system, a master device and a slave device are connected to each other via a power line, and the communication control method comprises:
communicating, by the master device, with the slave device using a first frequency band;
determining, by the master device, a communication packet loss rate of the slave device for a specified historical time period; and
controlling, by the master device in response to the communication packet loss rate of the slave device being greater than a predetermined packet loss rate threshold, the slave device to switch a communication frequency band of the slave device to a second frequency band, wherein the second frequency band is lower than the first frequency band.

2. The communication control method according to claim 1, wherein the number of the slave device is more than one, and the controlling, by the master device in response to the communication packet loss rate of the slave device being greater than a predetermined packet loss rate threshold, the slave device to switch a communication frequency band of the slave device to a second frequency band comprises:
controlling, by the master device in response to a communication packet loss rate of a first device among the slave devices being greater than the predetermined packet loss rate threshold, the first device to switch a communication frequency band of the first device to the second frequency band, while maintaining at least one other slave device on the first frequency band.

3. The communication control method according to claim 2, wherein after the controlling, by the master device in response to a communication packet loss rate of a first device among the slave devices being greater than the predetermined packet loss rate threshold, the first device to switch a communication frequency band of the first device to the second frequency band, while maintaining at least one other slave device on the first frequency band, the method further comprises:
communicating, by the master device, with the first device using the second frequency band and with the at least one other slave device using the first frequency band.

4. The communication control method according to claim 1, wherein the communicating, by the master device, with the slave device using a first frequency band comprises:
transmitting, by the master device, a communication message to the slave device using the first frequency band;
initiating, by the master device, timing; and
waiting, by the master device, to receive a response message from the slave device to the communication message within a predetermined timeout period.

5. The communication control method according to claim 1, wherein the determining, by the master device, a communication packet loss rate of the slave device for a specified historical time period comprises:
obtaining, by the master device for the specified historical time period, a volume of communication messages transmitted to the slave device and a volume of received response messages to the communication messages; and
determining, by the master device, the communication packet loss rate of the slave device based on a ratio of the volume of the received response messages to the volume of the communication messages.

6. The communication control method according to claim 2, wherein the controlling, by the master device, the first device to switch a communication frequency band of the first device to the second frequency band comprises:
transmitting, by the master device, a frequency band configuration instruction to the first device, wherein in response to the frequency band configuration instruction, the communication frequency band of the first device is switched to the second frequency band by the first device; and
storing, by the master device, a correspondence between a device address associated with the first device and the second frequency band.

7. The communication control method according to claim 6, wherein
before the transmitting, by the master device, a frequency band configuration instruction to the first device, the method further comprises:
generating, by the master device, a correspondence between device addresses associated with the slave devices and respective communication frequency bands, wherein in an initial state, each of the communication frequency bands in the correspondence is configured to the first frequency band, and
the storing, by the master device, a correspondence between a device address associated with the first device and the second frequency band comprises:
updating, by the master device for the correspondence, the communication frequency band corresponding to the device address associated with the first device to the second frequency band.

8. The communication control method according to claim 3, wherein the communicating, by the master device, with the first device using the second frequency band and with the at least one other slave device using the first frequency band comprises:
obtaining, by the master device, a to-be-transmitted message and extracting, by the master device, a target device address from the to-be-transmitted message;
determining, by the master device, a target communication frequency band corresponding to the target device address from a correspondence between device addresses associated with the slave devices and respective communication frequency bands, wherein in the correspondence, a device address associated with the first device is stored in association with the second frequency band, and a device address associated with the at least one other slave device is stored in association with the first frequency band;
transmitting, by the master device, the to-be-transmitted message to the slave device associated with the target device address by using the first frequency band, in response to the target communication frequency band being the first frequency band; and
transmitting, by the master device, the to-be-transmitted message to the first device associated with the target device address by using the second frequency band, in response to the target communication frequency band being the second frequency band.

9. The communication control method according to claim 8, wherein the transmitting, by the master device, the to-be-transmitted message to the slave device associated with the target device address by using the first frequency band, in response to the target communication frequency band being the first frequency band comprises:
obtaining, by the master device, a current communication frequency band of the master device, in response to the target communication frequency band being the first frequency band; and
switching, by the master device in response to the current communication frequency band being the second frequency band, the current communication frequency band from the second frequency band to the first frequency band, and transmitting, by the master device, the to-be-transmitted message to the slave device associated with the target device address by using the first frequency band.

10. The communication control method according to claim 8, wherein the transmitting, by the master device, the to-be-transmitted message to the first device associated with the target device address by using the second frequency band, in response to the target communication frequency band being the second frequency band comprises:
obtaining, by the master device, a current communication frequency band of the master device, in response to the target communication frequency band being the second frequency band; and
switching, by the master device in response to the current communication frequency band being the first frequency band, the current communication frequency band from the first frequency band to the second frequency band, and transmitting, by the master device, the to-be-transmitted message to the first device associated with the target device address by using the second frequency band.

11. The communication control method according to claim 7, wherein the master device is further communicatively connected to a host computer, and the method further comprises:
receiving, by the master device, a relationship configuration instruction transmitted by the host computer, and obtaining, by the master device, a to-be-configured device and a to-be-configured frequency band from the relationship configuration instruction; and
updating, by the master device for the correspondence, the communication frequency band corresponding to a device address associated with the to-be-configured device to the to-be-configured frequency band.

12. The communication control method according to claim 1, wherein the master device is further communicatively connected to a data collector in a photovoltaic system, and the method further comprises:
obtaining, by the master device, a broadcast message transmitted by the data collector, and broadcasting, by the master device, the broadcast message using the first frequency band, wherein the broadcast message is received by the slave device operating on the first frequency band; and
switching, by the master device, a current communication frequency band of the master device from the first frequency band to the second frequency band, and broadcasting, by the master device, the broadcast message using the second frequency band, wherein the broadcast message is received by the slave device operating on the second frequency band.

13. A communication control apparatus, **characterized in that** the communication control apparatus is arranged in a photovoltaic system, in the photovoltaic system, a master device and a slave device are connected to each other via a power line, and the communication control apparatus comprises:
a first communication module, configured to enable the master device to communicate with the slave device using a first frequency band and to determine a communication packet loss rate of the slave device for a specified historical time period; and
a first control module, configured to enable the master device to control the slave device to switch a communication frequency band of the slave device to a second frequency band in response to the communication packet loss rate of the slave device being greater than a predetermined packet loss rate threshold, wherein the second frequency band is lower than the first frequency band.

14. A master device, **characterized by** comprising:
a memory, configured to store machine-executable instructions executable by a processor; and
a processor, configured to execute the machine-executable instructions to implement the communication control method according to any one of claims 1 to 12.

15. A slave device, **characterized by** comprising:
a processor; and
a memory, configured to store machine-executable instructions executable by the processor, and
wherein the slave device is connected to the master device according to claim 14 via a power line.

16. A photovoltaic system, **characterized by** comprising the master device according to claim 14 and the slave device according to claim 15, wherein
the master device is configured to communicate with the slave device using a first frequency band, and determine a communication packet loss rate of the slave device for a specified historical time period; and
the master device is further configured to control the slave device to switch a communication frequency band of the slave device to a second frequency band in response to the communication packet loss rate of the slave device being greater than a predetermined packet loss rate threshold, wherein the second frequency band is lower than the first frequency band.

17. The photovoltaic system according to claim 16, wherein the master device is connected to a data collector in the photovoltaic system, and the slave device is connected to an inverter in the photovoltaic system.

18. The photovoltaic system according to claim 16, wherein the number of the slave device is more than one, and
the master device is further configured to: in response to a communication packet loss rate of a first device among the slave devices being greater than the predetermined packet loss rate threshold, control the first device to switch a communication frequency band of the first device to the second frequency band, while maintaining at least one other slave device on the first frequency band.

19. The photovoltaic system according to claim 18, wherein the master device is further configured to communicate with the first device using the second frequency band and communicate with the at least one other slave device using the first frequency band.

20. The photovoltaic system according to claim 16, wherein the master device is further configured to:
transmit a communication message to the slave device using the first frequency band and initiate timing, and
wait to receive a response message from the slave device to the communication message within a predetermined timeout period.

21. The photovoltaic system according to claim 16, wherein the master device is further configured to:
obtain, for the specified historical time period, a volume of communication messages transmitted to the slave device and a volume of received response messages to the communication messages, and
determine the communication packet loss rate of the slave device based on a ratio of the volume of the received response messages to the volume of the communication messages.

22. The photovoltaic system according to claim 18, wherein the master device is further configured to transmit a frequency band configuration instruction to the first device,
the first device is configured to receive the frequency band configuration instruction and switch the communication frequency band of the first device to the second frequency band, and
the master device is further configured to store a correspondence between a device address associated with the first device and the second frequency band.

23. The photovoltaic system according to claim 22, wherein the master device is further configured to:
generate a correspondence between device addresses associated with the slave devices and respective communication frequency bands, wherein in an initial state, each of the communication frequency bands in the correspondence is configured to the first frequency band, and
update, for the correspondence, the communication frequency band corresponding to the device address associated with the first device to the second frequency band, after transmitting the frequency band configuration instruction to the first device.

24. The photovoltaic system according to claim 19, wherein the master device is further configured to:
obtain a to-be-transmitted message and extract a target device address from the to-be-transmitted message,
determine a target communication frequency band corresponding to the target device address from a correspondence between device addresses associated with the slave devices and respective communication frequency bands, wherein in the correspondence, a device address associated with the first device is stored in association with the second frequency band, and a device address associated with the at least one other slave device is stored in association with the first frequency band,
transmit the to-be-transmitted message to the slave device associated with the target device address by using the first frequency band, in response to the target communication frequency band being the first frequency band, and
transmit the to-be-transmitted message to the first device associated with the target device address by using the second frequency band, in response to the target communication frequency band being the second frequency band.

25. The photovoltaic system according to claim 24, wherein the master device is further configured to:
obtain a current communication frequency band of the master device, in response to the target communication frequency band being the first frequency band, and
switch, in response to the current communication frequency band being the second frequency band, the current communication frequency band from the second frequency band to the first frequency band, and transmit the to-be-transmitted message to the slave device associated with the target device address by using the first frequency band.

26. The photovoltaic system according to claim 24, wherein the master device is further configured to:
obtain a current communication frequency band of the master device, in response to the target communication frequency band being the second frequency band, and
switch, in response to the current communication frequency band being the first frequency band, the current communication frequency band from the first frequency band to the second frequency band, and transmit the to-be-transmitted message to the first device associated with the target device address by using the second frequency band.

27. The photovoltaic system according to claim 23, wherein the master device is further communicatively connected to a host computer, and
the master device is further configured to:
receive a relationship configuration instruction transmitted by the host computer, and obtain a to-be-configured device and a to-be-configured frequency band from the relationship configuration instruction, and
update, for the correspondence, the communication frequency band corresponding to a device address associated with the to-be-configured device to the to-be-configured frequency band.

28. The photovoltaic system according to claim 16, wherein the master device is further communicatively connected to a data collector in the photovoltaic system,
the master device is further configured to obtain a broadcast message transmitted by the data collector and broadcast the broadcast message using the first frequency band,
the slave device operating on the first frequency band is configured to receive the broadcast message,
the master device is further configured to switch a current communication frequency band of the master device from the first frequency band to the second frequency band, and broadcast the broadcast message using the second frequency band, and
the slave device operating on the second frequency band is configured to receive the broadcast message.
